# FASCICULE DE BREVET EUROPEEN

(11) **EP 3 310 604 B1**
(45) Date de publication et mention de la délivrance du brevet: **07.08.2019**
(21) Numéro de dépôt: 16739199.4
(22) Date de dépôt: 03.06.2016
(51) Int. Cl.: B60K 1/04, B62D 43/10

(54) **AGENCEMENT DE SUPPORT DE BATTERIE POUR VÉHICULE HYBRIDE**
BATTERIETRÄGERANORDNUNG FÜR EIN HYBRIDFAHRZEUG
BATTERY-SUPPORTING ARRANGEMENT FOR A HYBRID VEHICLE

(30) Priorité: 19.06.2015 FR 1555635
(43) Date de publication de la demande: 25.04.2018
(73) Titulaire: Renault S.A.S., 92100 Boulogne-Billancourt (FR)
(72) Inventeur: VINIAL, Christophe, 91220 Le Plessis Pate (FR)
(86) Numéro de dépôt international: PCT/FR2016/051334
(87) Numéro de publication internationale: WO 2016/203130

(56) Documents cités:
- WO-A1-2015/019742
- WO-A1-2015/063839
- CN-U- 201 890 126
- JP-A- 2011 219 037
- JP-A- 2013 035 435
- JP-A- 2014 133 464
- US-A1- 2004 079 569
- US-A1- 2005 285 563

## Description

La présente invention concerne un agencement de support d'une batterie d'alimentation d'une machine électrique embarquée dans un véhicule automobile hybride.

On connaît certains véhicules de type véhicule hybride (véhicules dits HEV « Hybrid Electric Véhiculé » ou PHEV « Plug-in Hybrid Electric Vehicle » en terminologie anglo-saxonne), qui comprennent un petit dispositif électrique, désigné par l'acronyme anglais « SED » (pour « Small Electric Device »).

Un tel petit dispositif électrique comprend une machine électrique embarquée dans le véhicule, qui peut réaliser une ou plusieurs des fonctions suivantes telle que apporter une puissance et un couple d'assistance au moteur thermique du véhicule, notamment dans les phases de démarrage, décollage et roulage, généralement à bas régime et/ou faible vitesse, ou encore apporter l'énergie nécessaire au redémarrage du moteur thermique après un arrêt temporaire (fonction appelée « stop and start » en terminologie anglo-saxonne).

On connaît des véhicules où le petit dispositif électrique est fixé dans une région en arrière du dossier de la banquette arrière du véhicule (rang 2), par exemple sur une partie avant du plancher arrière de la structure de caisse. Aussi, un tel petit dispositif électrique est alimenté en électricité par une batterie d'alimentation, typiquement une batterie 48 volts. Un volume doit donc être réservé pour l'intégration de la batterie en partie arrière du véhicule.

D'autres agencements sont décrit dans les documents JP2014133464, WO2015/063839, JP2013 035435, CN201890126U,JP20112190037. JP2014133464 décrit par exemple un agencement de support de batterie embarquée dans un véhicule comportant un plancher arrière de caisse muni d'un logement de réception pour la roue de secours. Il existe un besoin pour un agencement de support de batterie au niveau de la partie arrière du véhicule, qui soit simple à monter et facilite l'implantation de la batterie, sans perturber l'intégration des multiples fonctions liées aux spécificités du petit dispositif électrique implanté.

Ce but est atteint grâce à un agencement de support selon la revendication 1.

Selon d'autres caractéristiques avantageuses de l'agencement de support conforme à l'invention, prises isolément ou en combinaison :
- lesdits points de fixation sont agencés sur des parties latérales dudit élément de support situées de part et d'autre de ladite zone de réception de ladite batterie suivant l'axe longitudinal dudit élément de support ;
- lesdites parties latérales dudit élément de support comprennent des moyens de positionnement dudit élément de support relativement audit plancher arrière de caisse, notamment relativement à un plan longitudinal transversal dudit plancher arrière de caisse ;
- lesdits moyens de positionnement comprennent au moins un pion de positionnement s'étendant dans une direction sensiblement normale au plan dudit élément de support et apte à traverser un orifice correspondant ménagé sur ledit plancher arrière de caisse ;
- ledit élément de support comprend des moyens de fixation d'un carter de batterie et ledit élément de support comprend une barre de renfort longitudinale montée de manière amovible sur ledit élément de support et adaptée pour s'étendre en regard de ladite zone de réception de batterie, de manière à constituer un appui pour ledit carter de batterie en partie supérieure dudit carter de batterie ;
- ledit élément de support comprend une traverse longitudinale d'arrêt de charge adaptée à s'étendre transversalement dans le véhicule entre des bordures latérales dudit plancher arrière de caisse ;
- ladite traverse longitudinale d'arrêt de charge comprend un tube cintré fixé à chacune de ses extrémités audit élément de support ;
- une jambe de reprise d'effort est disposé à proximité de chacune des extrémités de ladite traverse longitudinale d'arrêt de charge, pour relier ladite traverse et ledit élément de support de part et d'autre de ladite zone de réception de ladite batterie ;
- il comprend moyens de fixation d'un groupe moto-ventilateur sur une partie latérale dudit élément de support.

D'autres particularités et avantages de l'invention ressortiront à la lecture de la description faite ci-après d'un mode de réalisation particulier de l'invention, donné à titre indicatif mais non limitatif, en référence aux figures annexées dans lesquelles :
- la figure 1 représente une vue en perspective d'un agencement de support de batterie en partie arrière d'un véhicule selon un mode de réalisation de l'invention ;
- la figure 2 représente une vue en perspective opposée de l'agencement de support de batterie représenté à la figure 1 ;
- la figure 3 est une vue éclatée de l'élément de support mis en oeuvre dans l'agencement de support représenté aux figures 1 et 2 ;
- la figure 4 représente l'agencement de support de batterie de la figure 1, montré dans son environnement de montage.

Dans la présente description, les termes avant, arrière, font référence aux directions avant et arrière du véhicule. Les axes X, Y, Z, correspondent respectivement à l'axe longitudinal (d'avant en arrière), transversal (orienté vers la droite) et vertical (orienté vers le haut) du véhicule.

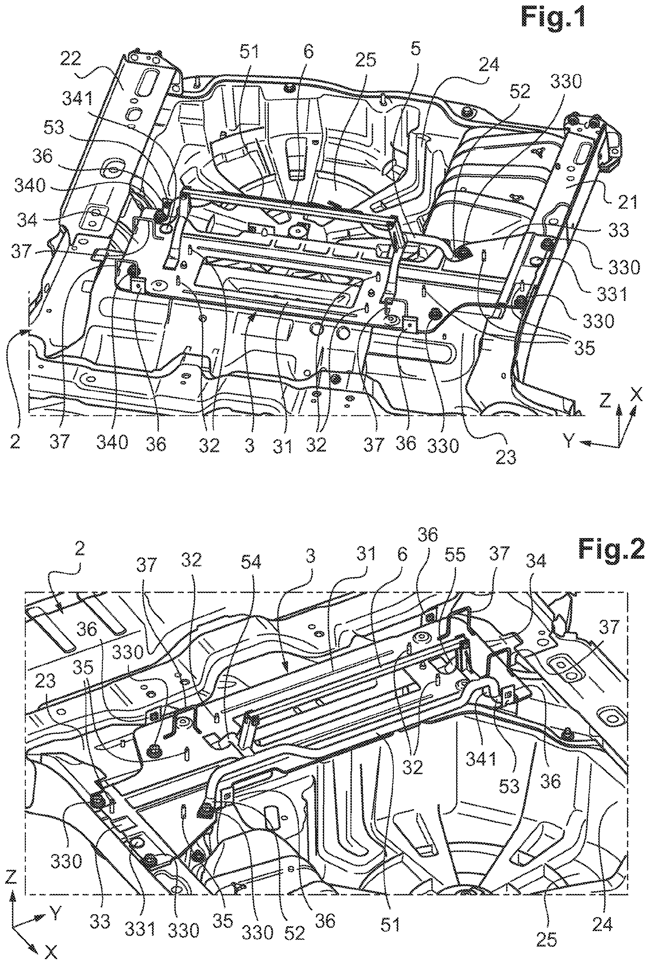

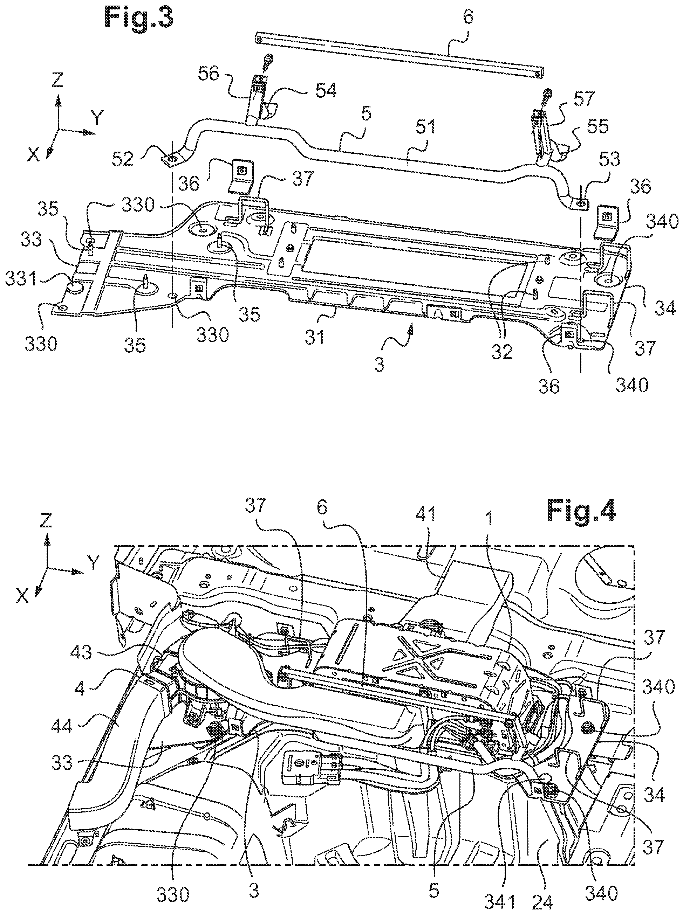

Les figures 1 et 2 représentent, selon deux orientations opposées, respectivement d'avant en arrière et d'arrière en avant, un agencement de support dans un véhicule automobile pour une batterie (référencée 1 sur la figure 4), destinée à l'alimentation d'un petit dispositif électrique implanté dans le véhicule (non représenté) et dédié à l'assistance du moteur thermique. Sur ces figures, est représentée une structure de caisse arrière 2 du véhicule automobile, comprenant deux bordures latérales ou logerons 21, 22, s'étendant longitudinalement entre lesquels on peut venir fixer une plaque 23 s'étendant dans un plan sensiblement longitudinal transversal et formant ainsi un plancher arrière de caisse. Le plancher arrière de caisse 23 du véhicule est en outre formé d'un logement concave 24 constituant un bac de réception de roue de secours. La paroi de fond 25 du logement concave 24 formant bac de réception de roue de secours et la plaque du plancher arrière de caisse 23 sont inclues dans des plans respectifs différents et normaux à l'axe Z, une fois le bac de réception de roue de secours assemblé au plancher arrière de caisse.

Conformément à l'invention, l'agencement de support pour la batterie 1 comprend un élément de support 3 allongé sensiblement plan, s'étendant transversalement au plancher arrière de caisse 23, et fixé directement sur la plaque du plancher arrière de caisse 23 dans une région de ce dernier située immédiatement à l'avant et au-dessus du logement concave 24 de réception de roue de secours. Autrement dit, l'élément de support 3 est adapté à s'étendre transversalement sur le plancher arrière de caisse 23, de manière à être située à l'arrière d'une rangée d'au moins un dossier de siège d'une banquette passager arrière du véhicule et à l'avant du logement concave 24 de réception de la roue de secours.

L'élément de support 3 est préférentiellement constitué d'une pièce de tôlerie, sensiblement en forme de quadrilatère, obtenue par exemple par emboutissage.

L'élément de support 3 comprend principalement une zone de réception 31, sensiblement centrale, destinée à accueillir et maintenir en place la batterie 1 sur l'élément de support 3 lorsque l'élément de support 3 est fixé sur le plancher arrière de caisse 23. Pour ce faire, la zone de réception de batterie 31 de l'élément de support 3 est équipée de moyens de maintien 32 de la batterie sur la zone de réception 31, se présentant par exemple sous la forme d'ergots de fixation s'étendant sensiblement verticalement vers le haut depuis une surface de la zone de réception 31 et destinés à être insérés dans des ouvertures de montage correspondantes de la batterie lorsque cette dernière est montée sur la zone de réception de batterie 31 de l'élément de support 3. A noter que dans un exemple de réalisation, la zone de réception de batterie 31 peut être partiellement ajourée, par exemple au moyen d'une ouverture sensiblement rectangulaire pratiquée dans la zone de réception de batterie, comme illustré sur les figures, de façon à optimiser la masse de l'élément de support 3, sans pour autant détériorer sa tenue mécanique.

L'élément de support 3 comporte par ailleurs des parties latérales 33, 34 situées respectivement de part et d'autre de la zone de réception de batterie 31, suivant l'axe longitudinal de l'élément de support 3 (confondu avec l'axe transversal du véhicule lorsque l'élément de support est fixé sur le plancher arrière de caisse). Ces parties latérales 33, 34 de l'élément de support 3 sont pourvues de points de fixation 330, 340 destinés à être fixés au plancher arrière de caisse 23, de façon à permettre la fixation de l'élément de support 3 directement sur le plancher arrière de caisse 23. Selon l'exemple de réalisation illustré, on prévoit quatre points de fixation 330 sur le plancher arrière de caisse 23 répartis sur une première partie latérale 33 de l'élément de support 3 et deux points de fixation 340 sur le plancher arrière de caisse 23 répartis sur l'autre partie latérale 34, située à l'opposée de la première partie latérale 33 par rapport à la zone de réception de batterie 31. Ces points de fixation agencés au niveau des parties latérales de l'élément de support 3 autorisent une fixation suivant l'axe vertical de l'élément de support au plancher arrière de caisse, par exemple au moyen de vis de fixation coopérant avec des structures de fixation correspondantes agencées sur le plancher arrière de caisse. Les points de fixation agencés au niveau des parties latérales de l'élément de support sont répartis de manière à permettre la fixation sur et/ou à proximité immédiate des bordures latérales du plancher arrière de caisse.

Les parties latérales 33, 34 de l'élément de support 3 comprennent en outre des moyens de positionnement 331, 341 destinés à permettre de positionner l'élément de support 3 et partant, la batterie montée dessus, relativement au plancher arrière de caisse 23 et notamment pour permettre son positionnement relativement au plan longitudinal transversal du plancher arrière de caisse 23. Selon l'exemple de réalisation, ces moyens de positionnement comprennent un pion de positionnement 331, 341 respectivement agencé sur chacune des deux parties latérales 33, 34. Ces pions de positionnement s'étendent dans une direction sensiblement normale au plan de l'élément de support 3 (sensiblement suivant l'axe vertical) et sont destinés à traverser un orifice correspondant ménagé sur le plancher arrière de caisse 23 lorsque l'élément de support est fixé au plancher arrière de caisse.

Suivant un mode de réalisation de l'invention, l'élément de support 3 pour la batterie est conçu pour intégrer d'autres fonctions que celle visant à l'implantation et au maintien de la batterie au niveau de plancher arrière de caisse du véhicule, au-dessus et à l'avant du bac de réception de roue de secours.

En particulier, suivant l'exemple de réalisation, l'élément de support 3 comprend des moyens de fixation 35 adaptés pour fixer un groupe moto-ventilateur sur l'élément de support 3. Un tel groupe moto-ventilateur est en effet nécessaire au refroidissement de la batterie 1. Pour ce faire, comme illustré en référence à la figure 4, la circulation d'air nécessaire au refroidissement de la batterie 1 est assurée par l'intermédiaire d'un conduit d'aspiration 41 permettant d'aspirer l'air dans l'habitacle du véhicule, l'air cheminant ensuite à travers la batterie 1 pour la refroidir, puis circule au travers d'un conduit 42 jusqu'à une pompe aspirante 43, avant de ressortir par un conduit d'extraction 44 disposé en aval de la pompe 43. Les moyens de fixation 35 du groupe moto-ventilateur sur l'élément de support 3 sont agencés selon l'exemple de réalisation au niveau de la partie latérale 33 de l'élément de support 3 et sont plus particulièrement conçus pour permettre de fixer la pompe aspirante 43 du groupe moto-ventilateur 4 sur cette partie latérale 33 de l'élément de support 3. Les moyens de fixation 35 se présentent par exemple sous la forme d'ergots de fixation s'étendant sensiblement verticalement vers le haut depuis une surface de la partie latérale 34 et sont destinés à être insérés dans des ouvertures de montage correspondantes de la pompe 41 lorsque cette dernière est montée sur la partie latérale 34 de l'élément de support 3.

L'élément de support 3 est en outre conçu pour assurer l'intégration de la fonction d'arrêt bagages dans le coffre du véhicule. Pour ce faire, l'élément de support 3 intègre une traverse longitudinale d'arrêt de charge 5, fixée sur l'élément de support 3, et adaptée à s'étendre transversalement dans le véhicule entre les bordures latérales du plancher arrière de caisse 23, lorsque l'élément de support 3 est fixé sur le plancher arrière de caisse. La traverse longitudinale d'arrêt de charge 5 est constitué par exemple d'un tube cintré 51 fixé au niveau de chacune de ses extrémités 52, 53 sur l'élément de support, en particulier sur les parties latérales respectives de l'élément de support. Avantageusement, des points de fixation 330, 340 de l'élément de support sur le plancher arrière de caisse peuvent être utilisés pour relier mécaniquement les extrémités 52, 53 du tube soudé 51 à l'élément de support.

On prévoit en outre, à proximité de chacune des extrémités 52, 53 de la traverse longitudinale d'arrêt de charge 5, une jambe de reprise d'effort, respectivement 54, 55, s'étendant perpendiculairement à la traverse à l'opposé de la partie arrière du plancher arrière de caisse par rapport à la traverse et permettant de relier la traverse 5 et l'élément de support 3 de part et d'autre de la zone de réception 31 de la batterie. Les jambes de reprise d'effort 54, 55 permettant ainsi de reprendre les efforts s'exerçant sur la traverse 5 dans le sens longitudinal.

Selon l'exemple de réalisation, l'élément de support 3 comprend encore des moyens de fixation 36 aptes à permettre la fixation d'un carter de batterie (habillage autour de la batterie, non représenté). L'élément de support 3 comprend aussi préférentiellement une barre de renfort longitudinale 6 montée de manière amovible sur l'élément de support 3 et adaptée pour s'étendre transversalement sensiblement en regard de la zone de réception de batterie 31, de manière à constituer un appui pour le carter de batterie en partie supérieure du carter de batterie lorsque ce dernier est monté autour de la batterie sur l'élément de support. Selon l'exemple de réalisation, la barre de renfort longitudinale 6 du carter de batterie est montée à chacune de ses extrémités, par exemple par l'intermédiaire de vis de fixation, sur des pattes de support 56, 57 faisant saillie sensiblement verticalement des jambes de reprise d'effort 51, 55.

Enfin, selon l'exemple de réalisation, l'élément de support 3 comprend des poignées de préhension 37, situées de part et d'autre de la zone de réception 31 de la batterie. Chacune de ces poignées de préhension 37 est par exemple constituée par un fil cintré formant un arceau, fixé à chacune de ses extrémités sur la surface de l'élément de support, de chaque côté de la zone de réception de batterie. Les poignées de préhension 37 ainsi fixées à l'élément de support sont adaptées pour coopérer avec un moyen d'assistance de montage pour la manutention et la mise en place de l'élément de support sur le plancher arrière de caisse. En particulier, un outil ayant la forme d'une fourche à deux longerons porteurs horizontaux destinés à coopérer avec les poignées de préhension 37 agencées de chaque côté de la zone de réception batterie de l'élément de support, peut être utilisé pour manutentionner l'élément de support, notamment pour soulever et installer ou déposer l'élément de support.

L'intégration « tout en 1 » à l'élément de support 3 des diverses fonctions décrites ci-dessus permet de réaliser une préparation montage de l'ensemble en bord de chaine de montage, avant mise en place dans le véhicule. Cela facilite l'opération de montage et d'implantation de ces fonctions au sein du véhicule, et permet de conserver une bonne ergonomie en préparation en bord de chaine, plutôt que de multiples interventions à l'intérieur du véhicule.

## Revendications

1. Agencement de support d'une batterie (1) d'alimentation d'une machine électrique embarquée dans un véhicule automobile hybride comportant un plancher arrière de caisse (23) muni d'un logement concave (24) de réception d'une roue de secours, l'agencement comprenant un élément de support (3) allongé sensiblement plan comportant une zone de réception (31) de ladite batterie pourvue de moyens de maintien (32) de ladite batterie sur ledit élément de support, ledit élément de support (3) comportant des points de fixation (330, 340) dudit élément de support sur ledit plancher arrière de caisse et s'étendant transversalement audit plancher arrière de caisse immédiatement à l'avant et au-dessus dudit logement concave (24) de réception de roue de secours, **caractérisé en ce que** ledit élément de support (3) comprend des poignées de préhension (37) situées de part et d'autre de la zone de réception (31) de ladite batterie, lesdites poignées de préhension (37) comprenant un fil cintré en forme d'arceau fixé sur ledit élément de support (3) et adapté pour coopérer avec un moyen d'assistance de montage pour la manutention et la mise en place dudit élément de support sur ledit plancher arrière de caisse.

2. Agencement de support selon la revendication 1, **caractérisé en ce que** lesdits points de fixation sont agencés sur des parties latérales (33, 34) dudit élément de support (3) situées de part et d'autre de ladite zone de réception (31) de ladite batterie suivant l'axe longitudinal dudit élément de support (3).

3. Agencement selon la revendication 2, **caractérisé en ce que** lesdites parties latérales (33, 34) dudit élément de support comprennent des moyens de positionnement (331, 341) dudit élément de support (3) relativement audit plancher arrière de caisse (23), notamment relativement à un plan longitudinal transversal dudit plancher arrière de caisse.

4. Agencement selon la revendication 3, **caractérisé en ce que** lesdits moyens de positionnement (331, 341) comprennent au moins un pion de positionnement s'étendant dans une direction sensiblement normale au plan dudit élément de support et apte à traverser un orifice correspondant ménagé sur ledit plancher arrière de caisse.

5. Agencement selon l'une quelconque des revendications précédentes, **caractérisé en ce que** ledit élément de support (3) comprend des moyens de fixation (36) d'un carter de batterie et **en ce que** ledit élément de support comprend une barre de renfort longitudinale (6) montée de manière amovible sur ledit élément de support (3) et adaptée pour s'étendre en regard de ladite zone de réception de batterie (31), de manière à constituer un appui pour ledit carter de batterie en partie supérieure dudit carter de batterie.

6. Agencement selon l'une quelconque des revendications précédentes, **caractérisé en ce que** ledit élément de support (3) comprend une traverse longitudinale d'arrêt de charge (5) adaptée à s'étendre transversalement dans le véhicule entre des bordures latérales dudit plancher arrière de caisse.

7. Agencement selon la revendication 6, **caractérisé en ce que** ladite traverse longitudinale d'arrêt de charge (5) comprend un tube cintré (51) fixé à chacune de ses extrémités (52, 53) audit élément de support (3).

8. Agencement selon l'une quelconque des revendications 6 ou 7, **caractérisé en ce qu'**il comporte une jambe de reprise d'effort (54, 55) à proximité de chacune des extrémités de ladite traverse longitudinale d'arrêt de charge (5), pour relier ladite traverse (5) et ledit élément de support (3) de part et d'autre de ladite zone de réception (31) de ladite batterie.

9. Agencement selon l'une quelconque des revendications précédentes, **caractérisé en ce qu'**il comprend de moyens de fixation d'un groupe moto-ventilateur sur une partie latérale dudit élément de support.

## Patentansprüche

1. Trägeranordnung einer Batterie (1) zur Versorgung einer an Bord eines Hybridkraftfahrzeugs mitgeführten elektrischen Maschine, welche einen hinteren Karosserieboden (23) aufweist, der mit einer konkaven Aufnahme (24) zum Aufnehmen eines Reserverades versehen ist, wobei die Anordnung ein im Wesentlichen ebenes, lang gestrecktes Trägerelement (3) umfasst, das einen Aufnahmebereich (31) für die Batterie aufweist, der mit Mitteln zum Halten (32) der Batterie auf dem Trägerelement versehen ist, wobei das Trägerelement (3) Punkte zur Befestigung (330, 340) des Trägerelements auf dem hinteren Karosserieboden aufweist und sich quer zu dem hinteren Karosserieboden unmittelbar vor und über der konkaven Aufnahme (24) zum Aufnehmen des Reserverades erstreckt, **dadurch gekennzeichnet, dass** das Trägerelement (3) Handgriffe (37) umfasst, die sich beiderseits des Aufnahmebereichs (31) für die Batterie befinden, wobei die Handgriffe (37) einen in Bügelform gebogenen Draht umfassen, der an dem Trägerelement (3) befestigt ist und dafür ausgelegt ist, mit einem Montagehilfsmittel für die Handhabung und die Anbringung des Trägerelements auf dem hinteren Karosserieboden zusammenzuwirken.

2. Trägeranordnung nach Anspruch 1, **dadurch gekennzeichnet, dass** die Befestigungspunkte an Seitenteilen (33, 34) des Trägerelements (3) angeordnet sind, die sich beiderseits des Aufnahmebereichs (31) für die Batterie entlang der Längsachse des Trägerelements (3) befinden.

3. Trägeranordnung nach Anspruch 2, **dadurch gekennzeichnet, dass** die Seitenteile (33, 34) des Trägerelements Mittel zur Positionierung (331, 341) des Trägerelements (3) in Bezug auf den hinteren Karosserieboden (23), insbesondere in Bezug auf eine in Längs- und Querrichtung verlaufende Ebene des hinteren Karosseriebodens, umfassen.

4. Trägeranordnung nach Anspruch 3, **dadurch gekennzeichnet, dass** die Mittel zur Positionierung (331, 341) wenigstens einen Positionierstift umfassen, der sich in einer Richtung erstreckt, die zur Ebene des Trägerelements im Wesentlichen senkrecht ist, und geeignet ist, eine entsprechende Öffnung zu durchqueren, die in dem hinteren Karosserieboden ausgebildet ist.

5. Anordnung nach einem der vorhergehenden Ansprüche, **dadurch gekennzeichnet, dass** das Trägerelement (3) Mittel zur Befestigung (36) eines Batteriegehäuses umfasst, und dadurch, dass das Trägerelement eine längs angeordnete Verstärkungsstange (6) umfasst, die lösbar an dem Trägerelement (3) angebracht ist und dafür ausgelegt ist, sich gegenüber dem Batterieaufnahmebereich (31) zu erstrecken, um so eine Abstützung für das Batteriegehäuse im oberen Teil des Batteriegehäuses zu bilden.

6. Anordnung nach einem der vorhergehenden Ansprüche, **dadurch gekennzeichnet, dass** das Trägerelement (3) eine Längstraverse zur Ladungssicherung (5) umfasst, die dafür ausgelegt ist, sich quer im Fahrzeug zwischen den Seitenrändern des hinteren Karosseriebodens zu erstrecken.

7. Anordnung nach Anspruch 6, **dadurch gekennzeichnet, dass** die Längstraverse zur Ladungssicherung (5) ein gebogenes Rohr (51) umfasst, das an jedem seiner Enden (52, 53) an dem Trägerelement (3) befestigt ist.

8. Anordnung nach einem der Ansprüche 6 oder 7, **dadurch gekennzeichnet, dass** sie einen Kraftaufnahmeschenkel (54, 55) in der Nähe jedes der Enden der Längstraverse zur Ladungssicherung (5) aufweist, um diese Traverse und das Trägerelement (3) beiderseits des Aufnahmebereichs (31) für die Batterie zu verbinden.

9. Anordnung nach einem der vorhergehenden Ansprüche, **dadurch gekennzeichnet, dass** sie Mittel zur Befestigung einer Gebläseeinheit an einem Seitenteil des Trägerelements umfasst.

## Claims

1. Arrangement for supporting a battery (1) for powering an electric motor on-board a hybrid motor vehicle, including a body rear floor (23) provided with a concave recess (24) for receiving a spare wheel, the arrangement comprising a substantially planar elongate supporting element (3) including an area (31) for receiving said battery provided with means (32) for holding said battery on said supporting element, said supporting element (3) including points (330, 340) for fastening said supporting element to said body rear floor and extending transversely to said body rear floor immediately in front of and above said concave recess (24) for receiving a spare wheel, **characterized in that** said supporting element (3) includes grip handles (37) located on either side of the receiving area (31) for said battery, said grip handles (37) including an arch-shaped wire that is fastened to said supporting element (3) and that is designed to cooperate with assembly assistance means for handling and positioning said supporting element on said body rear floor.

2. Supporting arrangement according to Claim 1, **characterized in that** said fastening points are arranged on lateral portions (33, 34) of said supporting element (3) that are located on either side of said receiving area (31) for said battery along the longitudinal axis of said supporting element (3).

3. Arrangement according to Claim 2, **characterized in that** said lateral portions (33, 34) of said supporting element include means (331, 341) for positioning said supporting element (3) in relation to said body rear floor (23), notably in relation to a transverse longitudinal plane of said body rear floor.

4. Arrangement according to Claim 3, **characterized in that** said positioning means (331, 341) include at least one positioning pin that extends in a direction substantially normal to the plane of said supporting element and that is designed to pass through a corresponding aperture formed in said body rear floor.

5. Arrangement according to any one of the preceding claims, **characterized in that** said supporting element (3) includes means (36) for fastening a battery casing and **in that** said supporting element includes a longitudinal reinforcing bar (6) that is mounted removably on said supporting element (3) and that is designed to extend opposite said battery receiving area (31) such as to form a support for said battery casing at the upper portion of said battery casing.

6. Arrangement according to any one of the preceding claims, **characterized in that** said supporting element (3) includes a longitudinal load-arresting cross member (5) that is designed to extend transversely in the vehicle between lateral edges of said body rear floor.

7. Arrangement according to Claim 6, **characterized in that** said longitudinal load-arresting cross member (5) includes a curved tube (51) fastened at each end (52, 53) to said supporting element (3).

8. Arrangement according to either one of Claims 6 and 7, **characterized in that** it includes a force absorbing strut (54, 55) close to each of the ends of said longitudinal load-arresting cross member (5) to link said cross member (5) and said supporting element (3) on either side of said receiving area (31) for said battery.

9. Arrangement according to any one of the preceding claims, **characterized in that** it includes means for fastening a fan unit to a lateral portion of said supporting element.
